# EUROPEAN PATENT APPLICATION

(11) **EP 2 590 422 A2**
(43) Date of publication of application: **08.05.2013**
(21) Application number: 12189956.1
(22) Date of filing: 25.10.2012
(51) Int. Cl.: H04N 21/00

(54) **Control method for performing social media function by electronic device using remote controller and the remote controller thereof**

(30) Priority: 04.11.2011 TW 100140221
(71) Applicant: Ting, Yi-Liang, Taipai City (TW)
(72) Inventor: Ting, Yi-Liang, Taipai City (TW)
(74) Representative: Viering, Jentschura & Partner

(57) **Abstract**

A control method for performing a social media function by an electronic device using a remote controller and the remote controller thereof are disclosed. After issuing to the electronic device a command of playing media, the remote controller uploads a media play latest status data to a server. Then, the server sends a connection status data to the remote controller according to the media play latest status data as well as directories and media play latest status data previously uploaded by the other remote controller. The remote controller makes reference to the connection status data, displays on a display the latest connection information pertaining to persons recorded in the directories, and optionally executes a social chat program to enable interactive communication.

## Description

### FIELD OF THE INVENTION

The present invention relates to control methods and remote controllers thereof, and more particularly, to a control method for performing a social media function by an electronic device using a remote controller and the remote controller thereof.

### BACKGROUND OF THE INVENTION

In general, there are two types of conventional remote controllers for use with home electric appliances, namely dedicated remote controllers and universal remote controllers. A dedicated remote controller is wholly committed to a home electric appliance in the remote control thereof, performs all remote control functions by means of their respective keys, and requires a user to perform remote control over the home electric appliance by means of user-defined keys. A universal remote controller can perform remote control over two or more home electric appliances simultaneously and has its internal electronic circuits designed to contain the remote control command codes of all intended home electric appliances. However, the human machine interface provided by the aforesaid conventional remote controllers is no more than the keys. That is to say, the design philosophy of the conventional remote controllers is restricted to a substitute for operation buttons on the panels of home electric appliances. Therefore, the conventional remote controllers intrinsically leave users uninformed.

Although conventional smart TV has the potential to function as social TV, its high manufacturing costs turn away prospective consumers in general.

The inventor of the present invention has filed the US Application No. 11/159,358 which is entitled Method of Controlling Remote Controlled Electronic Device Using Universal Remote Controller and Universal Remote Controller Thereof and published. The published patent application also serves as a reference for the present invention.

In view of the aforesaid drawbacks of the conventional remote controllers and conventional smart TV, the inventor of the present invention made efforts to improve the related prior art and invented a control method for performing a social media function by an electronic device using a remote controller and the remote controller thereof so as to perform social media functions by the remote controller.

### SUMMARY OF THE INVENTION

It is an objective of the present invention to provide a control method for performing a social media function by an electronic device using a remote controller and the remote controller thereof such that social media functions are available to users by means of the remote controller.

In order to achieve the above and other objectives, the present invention provides a control method for performing a social media function by an electronic device using a remote controller, wherein the remote controller is connected to a server via a communication link, has a playback list at least comprising at least one broadcasting entry, receives an execution command via an input device according to the playback list, and sends a radio signal command corresponding to the execution command to the electronic device via a radio signal emitting module, and the server transmitting a connection status data via the communication link and receiving a media play latest status data from the remote controller via the communication link, the control method comprising the steps of: A. providing the remote controller, wherein the remote controller at least comprises a processor, a display, the input device, the radio signal emitting module, and a social chat program; B. enabling the remote controller to access a directory and upload the directory to the server via the communication link, wherein the server stores the directory received; C. sending, after sending the radio signal command for playing the broadcasting entry from the remote controller to the electronic device, the media play latest status data corresponding to the radio signal command for playing the broadcasting entry from the remote controller to the server via the communication link, and then the server sends the connection status data to the remote controller via the communication link according to the media play latest status data received, the directory stored previously and corresponding to the remote controller, and other media play latest status data sent from the other remote controller owned by each of the persons recorded in the directories to the server; D. receiving the connection status data by the remote controller via the communication link, and then displaying a latest connection information screen of each of persons recorded in the directory by the remote controller according to the connection status data on the display; and E. optionally executing the social chat program by the processor of the remote controller to enable other persons connected to the server to interact with each other by the social chat program.

Furthermore, the present invention upholds the spirit of the control method and therefore provides a remote controller, comprising: a network communication module connected to a communication link and connected to a server via the communication link; an input device, a display, a radio signal emitting module, and a processor; a non-volatile memory device for storing a social chat program, a playback list, and program codes; wherein the playback list at least comprises at least one broadcasting entry, and the processor receiving an execution command via the input device according to the playback list, sending a radio signal command corresponding to the execution command to an electronic device via the radio signal emitting module according to the execution command, and executing the program codes, wherein the program codes comprises the commands: to enable the remote controller to access a directory and upload the directory to the server via the communication link, wherein the server stores the directory received; to send, after sending the radio signal command for playing the broadcasting entry from the remote controller to the electronic device, the media play latest status data corresponding to the radio signal command for playing the broadcasting entry from the remote controller to the server via the communication link, and then the server sends the connection status data to the remote controller via the communication link according to the media play latest status data received, the directory stored previously and corresponding to the remote controller, and other media play latest status data sent from the other remote controller owned by each of the persons recorded in the directories to the server; to receive the connection status data by the remote controller via the communication link, and then displaying a latest connection information screen of each of persons recorded in the directory by the remote controller according to the connection status data on the display; and to optionally execute the social chat program by the processor of the remote controller to enable other persons connected to the server to interact with each other by the social chat program.

### BRIEF DESCRIPTION OF THE DRAWINGS

The present invention will become more readily apparent to those ordinarily skilled in the art after reviewing the following detailed description and accompanying drawings, in which:
FIG. 1A is a schematic view of the structure of a remote controller of the present invention;
FIG. 1B is a schematic view of relationship between a server and a plurality of users using the remote controller of the present invention;
FIG. 2 is a schematic view of the data structure of a playback list according to the present invention;
FIG. 3 is a schematic view of the data structure of a broadcasting entry according to the present invention;
FIG. 4 is a schematic view of the structure of a server for use with the present invention;
FIG. 5 is a flow chart of a control method of the present invention;
FIG. 6 is a schematic view of the data structure of a directory according to the present invention;
FIG. 7 is a schematic view of the data structure of a media play latest status data according to the present invention;
FIG. 8 is a schematic view of a connection status data of the present invention; and
FIG. 9 is a schematic view of a social media function related screen displayed on a display of the remote controller of the present invention.

### DETAILED DESCRIPTION OF THE INVENTION

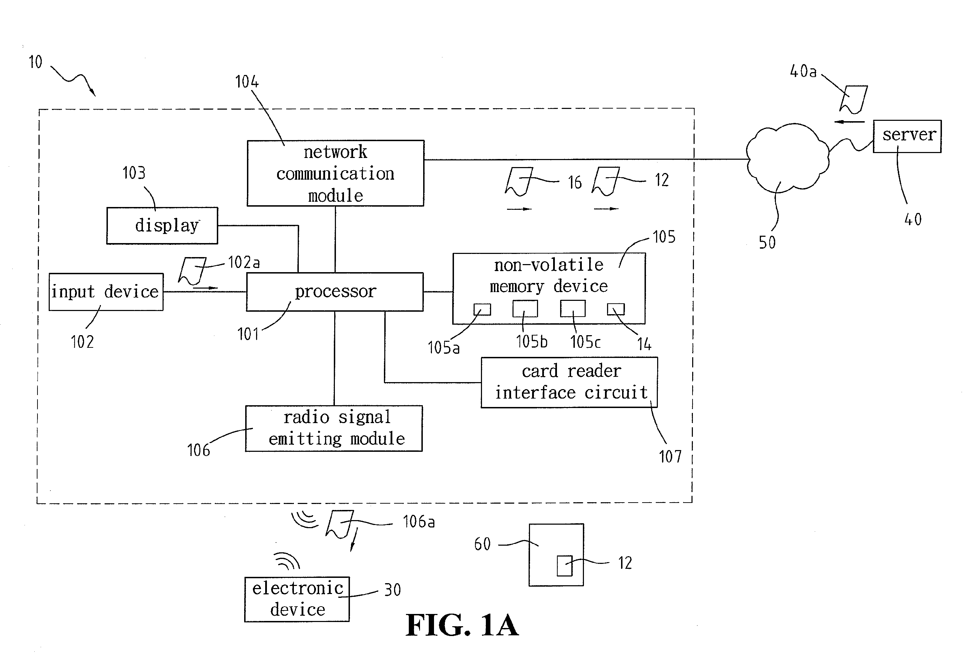

As shown in FIG. 1A, although hardware components attributed to a remote controller 10 and directly related to the present invention are depicted, components attributed to the remote controller 10 and not directly related to the present invention are not depicted. The remote controller 10 of the present invention comprises a processor 101, an input device 102, a display 103, a network communication module 104, a non-volatile memory device 105, and a radio signal emitting module 106, which are described below. The network communication module 104 is connected to a communication link 50, and is connected to a server 40 via the communication link 50. The network communication module 104 is implemented by the related prior art, such as the prior art pertaining to wired Ethernet communication, the prior art pertaining to wireless Ethernet communication, or the prior art pertaining to mobile phone communication based on wireless Internet access.

For example, the communication link 50 is one of a wired communication network, a wireless communication network, a local network, and INTERNET.

The non-volatile memory device 105 at least stores program codes 105a, a social chat program 105b, and a playback list 105c. For example, the non-volatile memory device 105 is implemented by conventional flash memories or non-volatile solid-state memories.

For example, the processor 101 of the remote controller 10 of the present invention may be implemented by a conventional ARM® processor, and the software environment of the remote controller 10 may be implemented by a conventional Android® system. One of the functions of the processor 101 is to execute the program codes 105a and the social chat program 105b.

The input device 102 and a display 103 are preferably conventional touch-control display devices, such as a conventional touch-control display device with a conventional resistive touch-control panel attached to a conventional liquid crystal display or a conventional touch-control display device with a conventional capacitive touch-control panel attached to a conventional liquid crystal display.

Alternatively, the input device 102 and the display 103 are separate. For example, the input device 102 is exemplified by a plurality of conventional keys, and the display 103 is exemplified by a conventional liquid crystal display.

The purpose of the input device 102 is to issue an execution command 102a pertaining to volume adjustment, channel selection, playing, etc. The processor 101 receives the execution command 102a and operates according to the execution command 102a. Then, the radio signal emitting module 106 sends to an electronic device 20 by wireless transmission a radio signal command 106a corresponding to the execution command 102a.

The radio signal emitting module 106 may be implemented by related prior arts of radio signal emission circuits used in conventional remote controllers (such as a conventional TV remote controller or a conventional TV learning remote controller).

The remote controller 10 further comprises a card reader interface circuit 107 for reading a memory card 60, such as an SD memory card. The memory card 60 stores data of a directory 12. The user of the remote controller 10 inserts the memory card 60 into a slot (not shown) of the card reader interface circuit 107. Another purpose of the processor 101 is to read the data of the directory 12 from the memory card 60. Afterward, the processor 101 either writes the data of the directory 12 to the non-volatile memory device 105 or stores the data of the directory 12 on a cloud storage device (not shown).

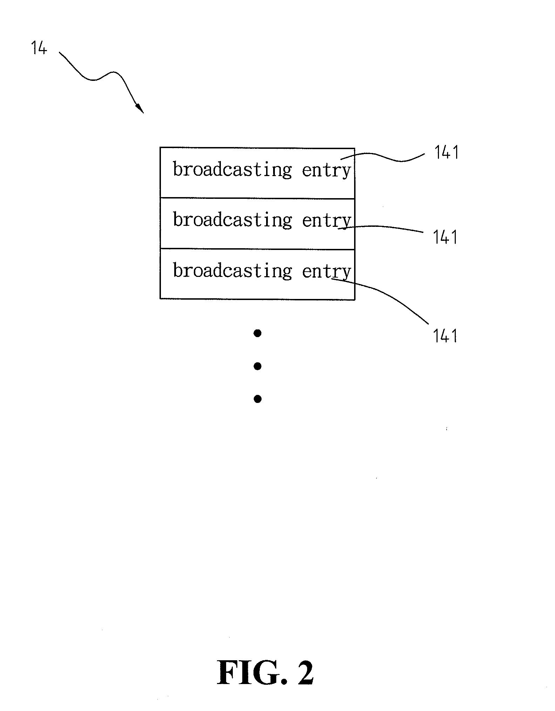

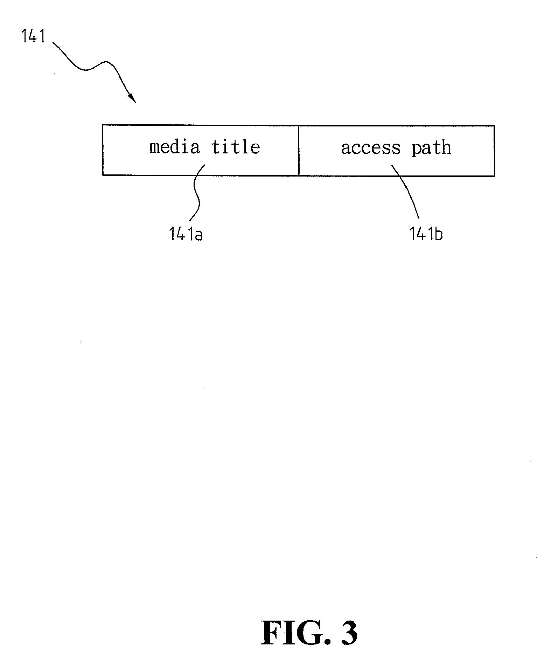

Referring to FIGs. 2, 3, a playback list 14 comprises at least one broadcasting entry 141. For example, the playback list 14 originates from one of an electronic program guide of a wired cable TV system station, an electronic program guide of a broadcast TV station, an electronic program guide of a web-based TV station, a media URL list of a media supply website, a karaoke song list, a CD/MP3 song list, a DVD video list, a VCD video list, and a Blu-ray video list, or a combination thereof. The broadcasting entry 141 at least comprises a media title 141a and an access path 141b. For example, media accessed by the broadcasting entry 141 include TV programs, movies, videos, or songs. For example, the media title 141a is "XX_TV_SHOW" or "ZZ_TV_SHOW". The access path 141b varies with the medium accessed. For example, when the medium to be accessed is a TV program of a broadcast TV station or a wired cable TV system station, the access path 141b is referred to as a TV channel number. For example, when the medium to be accessed is a TV program of a web-based TV station, the access path 141b is referred to as a universal resource locator (URL). For example, when the medium to be accessed is a movie, a video, or a song, which is stored on cloud or on an online hard disk drive, the access path 141b is referred to as a URL.

The remote controller 10 is connected to a related website by the communication link 50 to download and access the sources of the playback list 14, and then the processor 101 processes the sources to create the playback list 14. The playback list 14 can be stored on the non-volatile memory device 105 or another storage device (not shown) inside the remote controller 10.

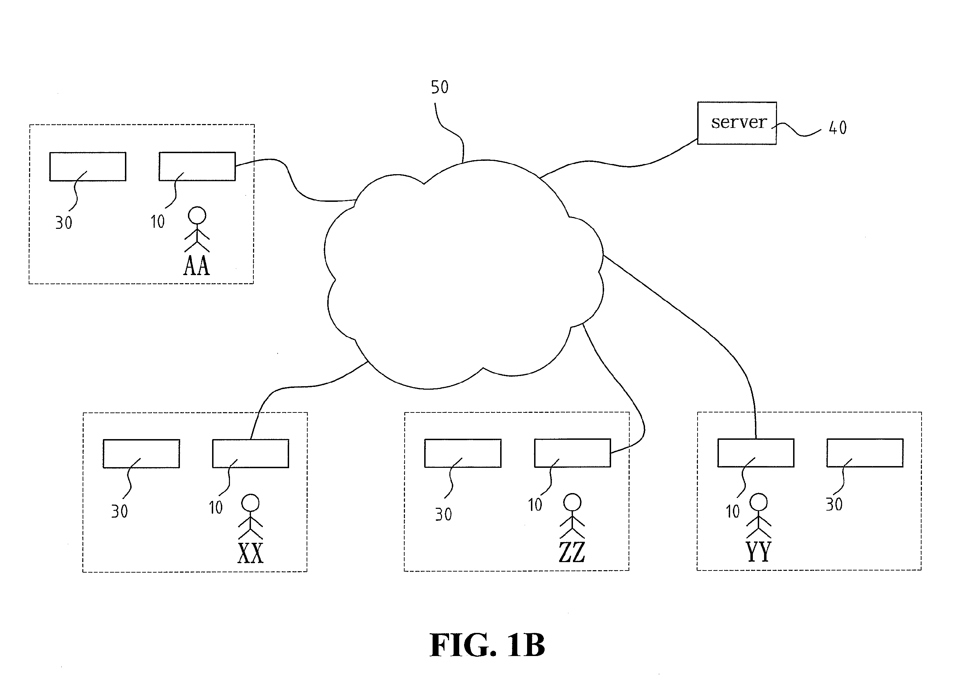

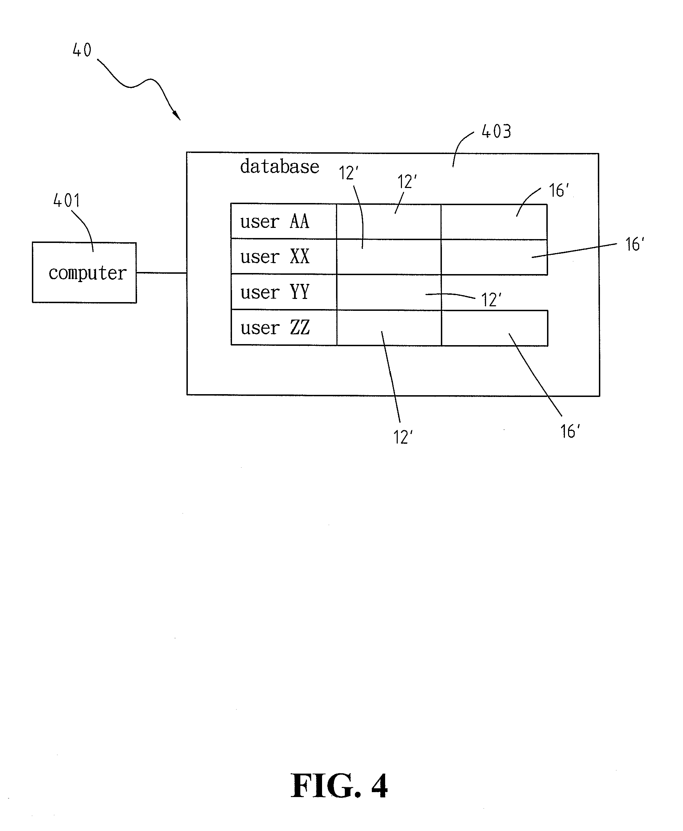

Referring to FIGs. 1A, 1B, 4, the server 40 comprises a computer 401 and a database 403. The database 403 stores a plurality of directories 12' having different contents and uploaded by users (such as users AA, XX, YY, ZZ...) in possession of the remote controllers 10, that is, the directories 12 contained in the remote controllers 10 in the possession of users AA, XX, YY, ZZ.... The server 40 may be implemented by a conventional server.

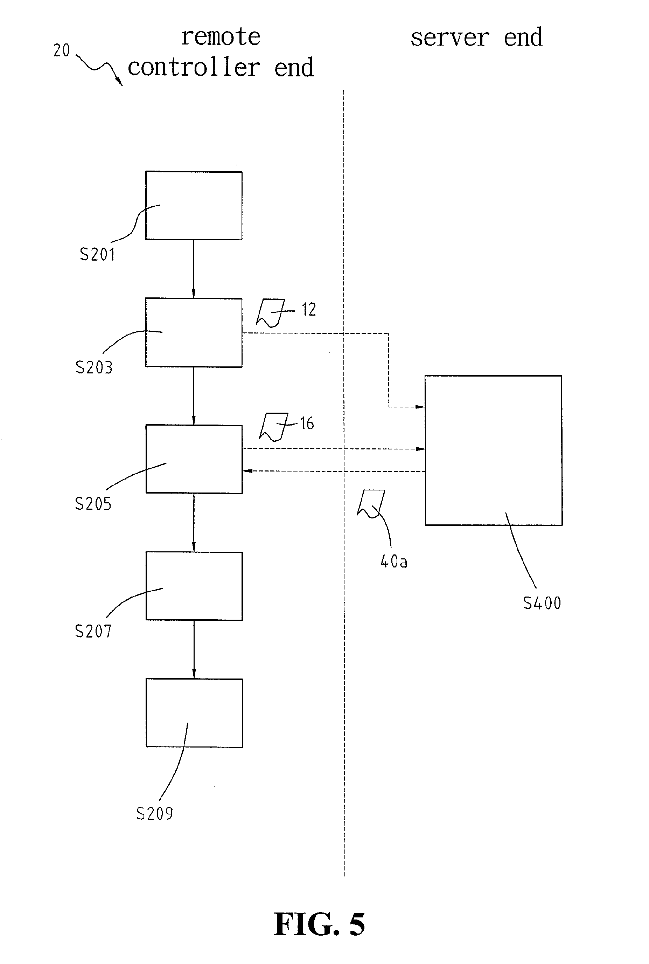

FIG. 5 is a flow chart of a control method 20 of the present invention. In step (201), the remote controller 10 is provided. The structure of the remote controller 10 is described in detail above and therefore is not described again hereunder for the sake of brevity. The remote controller 10 performs step (203) through step (209). In step (400), the server 40 sends a connection status data 40a to the remote controller 10 in response to a request from the remote controller 10.

In step (203), the remote controller 10 acquires data of the directory 12, and the remote controller 10 uploads the directory 12 to the server 40 via the communication link 50. Upon receipt of the directory 12, the server stores the directory 12 such that the directory 12 thus stored becomes one of the directories 12' in the database 403.

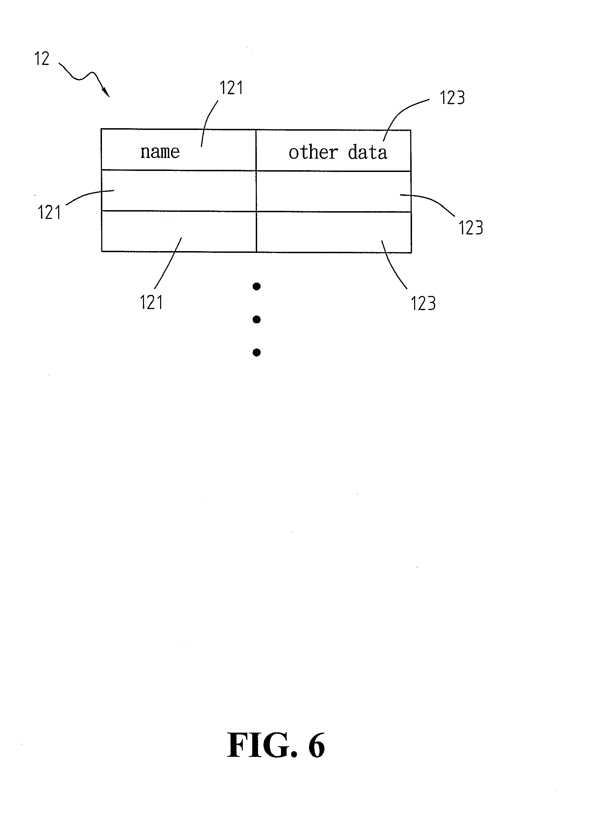

Referring to FIG. 6, the source of list-related data contained in the directory 12 is a directory stored on a user's mobile phone, a directory attributed to social websites and used by an online user, or a directory used by a user in accessing Internet phone service. The data structure of the directory 12 essentially comprises the field of a name 121 for recognizing the identity of related persons, such as contact persons, friends, or members. The data structure of the directory 12 further comprises the field of other data 123. A specific example of the other data 123 is Email addresses. For example, the directory 12 of the remote controller 10 in the possession of user AA (AA is the name of user AA) currently contains three records, namely user XX (XX is the name of user XX), user YY (YY is the name of user YY), and user ZZ (ZZ is the name of user ZZ).

Considering the data structure of the directory 12, the present invention can apply the prior art pertaining to form-related applications in programming a directory form-related application (not shown) for creating the directory 12. The directory form-related application can import the source of list-related data and compile the imported source of list-related data to form the directory 12. The directory form-related application is executed by another computer or stored on the non-volatile memory device 105 and executed by the processor 101.

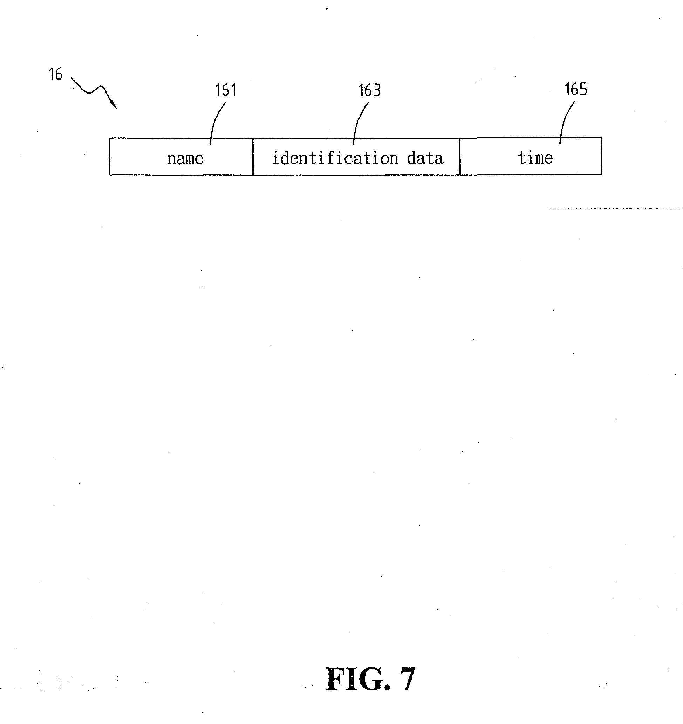

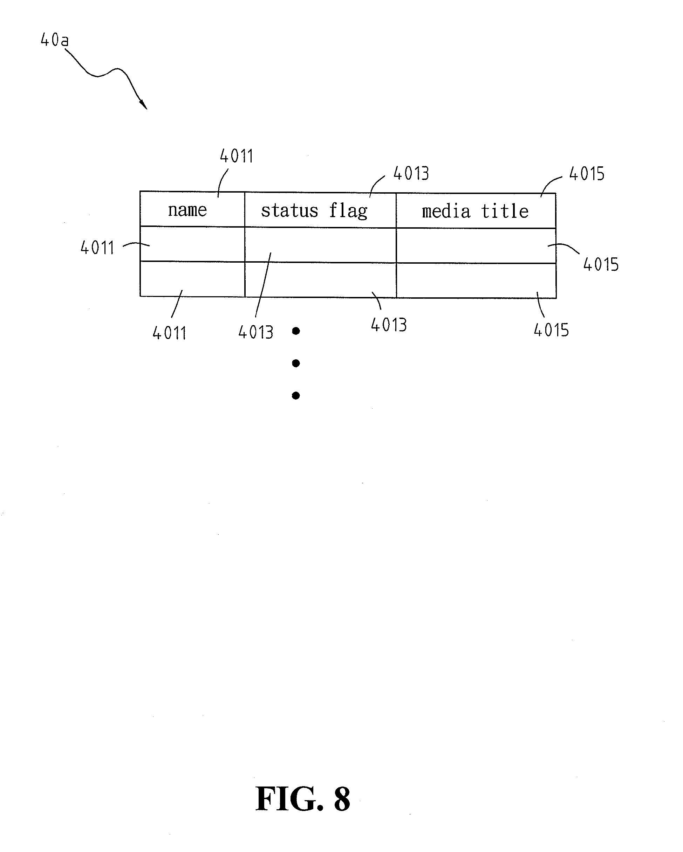

Referring to FIGs. 7, 8, in step (205), after sending to an electronic device 30 the radio signal command 106a for playing the broadcasting entry 141, the remote controller 10 sends to the server 40 via the communication link 50 a media play latest status data 16 corresponding to the radio signal command 106a for playing the broadcasting entry 141.

For example, the radio signal command 106a for playing the broadcasting entry 141 is applicable to switching between TV channels, clicking on or touching an icon or text of the medium displayed on the display 103, and other human machine interfaces for driving the electronic device 30 to play.

In another aspect, in step (400), the server 40 makes judgment based on the media play latest status data 16 received, the directories 12' stored previously and uploaded by the remote controller 10, and other media play latest status data 16' sent from the other remote controller 10' owned by each of the persons recorded in the directories 12' to the server 40, and then the connection status data 40a is sent to the remote controller 10 via the communication link 50.

Referring to FIG. 7, the data structure of the media play latest status data 16 essentially comprises the field of a name 161 for recognizing an identification data 163 and a time 165 of the medium being played. The name 161 is the name of the user of the remote controller 10. Given the name 161, the server 40 can find the directories 12' corresponding to the name 161 and contained in the database 403 stored on the server 40. The time 165 records the time at which the remote controller 10 uploads the media play latest status data 16.

The description below is exemplified by user AA. The remote controller 10 in the possession of user AA uploads the media play latest status data 16. The media play latest status data 16 thus uploaded becomes the media play latest status data 16' in the user AA record in the database 403. The server 40 searches the database 403 by the name 161 of the media play latest status data 16' attributed to user AA and finds the corresponding directories 12', that is, the directory 12' in the user AA record in the database 403. Then, the server 40 makes reference to the names 121 (that is, users XX, YY, ZZ) of the directory 12' and determines whether users having the names (that is, users XX, YY, ZZ) are connected to the server 40 or are offline. If it is determined that the users having the names are connected to the server 40, the server 40 will make reference to the names 121 of the online users and examine, one by one, the media play latest status data 16' uploaded by the users to the server 40. Afterward, the server 40 makes reference to the connection state of the persons having the names and produces the connection status data 40a. Then, the server 40 sends the connection status data 40a to the remote controller 10 via the communication link 50.

The media play latest status data 16' in FIG. 1 is described below, using user AA as an example. Users XX, ZZ are currently using the remote controllers 10 to operate the electronic devices 30 for playing a medium respectively; hence, the database 403 stores the media play latest status data 16' of user XX and the media play latest status data 16' of user ZZ. User YY is not currently using the remote controller 10; hence, the database 403 does not store the media play latest status data 16' of user YY.

Referring to FIG. 8, the data structure of the connection status data 40a essentially comprises the field of a name 4011, a status flag 4013, and the media title 4015. Using the aforesaid example once again, the name 4011 is identical to one of the names 121 of the directory 12, and the server 40 puts the names of users XX, YY, ZZ in the field of the name 4011. The media title 4015 is identical to the media title 141a of the broadcasting entry 141, and the server 40 puts in the field of the media title 4015 the title of the medium being played by each of the electronic devices 30 of users XX, YY, ZZ. The status flag 4013 gives users XX, YY, ZZ an instruction as to whether users XX, YY, ZZ are connected to the server 40 or are offline.

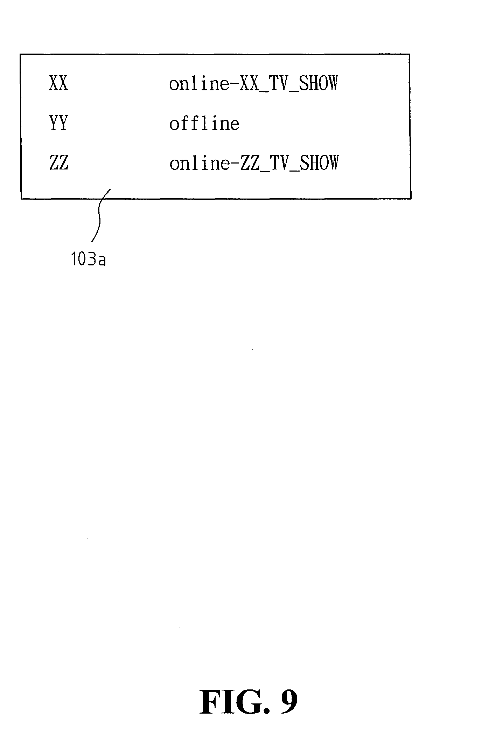

Referring to FIG. 9, in step (207), the remote controller 10 receives the connection status data 40a through the communication link 50, and then the remote controller 10 displays on the display 103 a latest connection information screen 103a of each of the persons recorded in the directory 12 according to the connection status data 40a. The description below is based on the aforesaid example. As indicated by the latest connection information screen 103a, users XX, ZZ are connected to the server 40 and are watching TV program XX_TV_SHOW and TV program ZZ_TV_SHOW, respectively, whereas user YY is not connected to the server 40.

In step (209), the processor 101 of the remote controller 10 optionally executes the social chat program 105b whereby persons recorded in the directory 12 and connected to the server 40 interact with each other. The description below is based on the aforesaid example. User AA in possession of the remote controller 10 can choose whether to execute the social chat program 105b or not. Hence, with the remote controller 10 and the control method 20 of the present invention, user AA, user XX, and user ZZ can interact with each other by the social chat program 105b. For example, upon execution of the social chat program 105b, user AA can invite user XX to join user AA watching a social medium or to join user AA having fun at an entertainment venue or at a place where user AA is present.

The aforesaid step (203) through step (209) can be implemented in the form of the program codes 105a.

Other electronic devices, such as a smartphone or a tablet computer, can also be employed to implement the control method 20 of the present invention, and are regarded as equivalent to the remote controller 10 of the present invention.

In addition to exercising remote control over the electronic devices 30, the remote controller 10 and the control method 20 of the present invention is capable of providing social media function (such as social TV function). Accordingly, the present invention involves an inventive step obviously and advantageously.

The present invention is disclosed above by a specific embodiment. However, persons skilled in the art should understand that the specific embodiment should not be interpreted as restrictive of the scope of the present invention. Hence, various changes and modifications can be made to the aforesaid embodiments by persons skilled in the art without departing from the spirit and the scope of the present invention. The changes and modifications thus made should fall within the scope of the present invention. Accordingly, the legal protection for the present invention should be defined by the appended claims.

## Claims

1. A control method for performing a social media function by an electronic device using a remote controller, wherein the remote controller is connected to a server via a communication link, has a playback list at least comprising at least one broadcasting entry, receives an execution command via an input device according to the playback list, and sends a radio signal command corresponding to the execution command to the electronic device via a radio signal emitting module, and the server transmitting a connection status data via the communication link and receiving a media play latest status data from the remote controller via the communication link, the control method comprising the steps of:
A. providing the remote controller, wherein the remote controller at least comprises a processor, a display, the input device, the radio signal emitting module, and a social chat program;
B. enabling the remote controller to access a directory and upload the directory to the server via the communication link, wherein the server stores the directory received;
C. sending, after sending the radio signal command for playing the broadcasting entry from the remote controller to the electronic device, the media play latest status data corresponding to the radio signal command for playing the broadcasting entry from the remote controller to the server via the communication link, and then the server sends the connection status data to the remote controller via the communication link according to the media play latest status data received, the directory stored previously and corresponding to the remote controller, and other media play latest status data sent from the other remote controller owned by each of the persons recorded in the directories to the server;
D. receiving the connection status data by the remote controller via the communication link, and then displaying a latest connection information screen of each of persons recorded in the directory by the remote controller according to the connection status data on the display; and
E. optionally executing the social chat program by the processor of the remote controller to enable other persons connected to the server to interact with each other by the social chat program.

2. The control method of claim 1, wherein the remote controller classifies the playback list by an attribute of each of the broadcasting entries.

3. The control method of claim 1, wherein the electronic device is one of a TV set, a set-top box, and a computer.

4. The control method of claim 1, wherein the communication link is one of a wired communication network, a wireless communication network, a local network, and INTERNET.

5. The control method of claim 1, wherein the playback list is one of an electronic program guide of a wired cable TV system station, an electronic program guide of a broadcast TV station, an electronic program guide of a web-based TV station, a media URL list of a media supply website, a karaoke song list, a CD/MP3 song list, a DVD video list, a VCD video list, and a Blu-ray video list.

6. The control method of claim 1, wherein the input device is a plurality of keys disposed on the remote controller.

7. The control method of claim 1, wherein the input device and the display are a display device with a touch-control panel.

8. The control method of claim 1, wherein the media play latest status data at least comprises a name and an identification data.

9. The control method of claim 1, wherein the directory data at least comprises a name and optionally comprises other data.

10. The control method of claim 1, wherein the connection status data at least comprises a name, a status flag, and a media title.

11. A remote controller, comprising:
a network communication module connected to a communication link and connected to a server via the communication link;
an input device, a display, a radio signal emitting module, and a processor;
a non-volatile memory device for storing a social chat program, a playback list, and program codes;
wherein the playback list at least comprises at least one broadcasting entry, and the processor receiving an execution command via the input device according to the playback list, sending a radio signal command corresponding to the execution command to an electronic device via the radio signal emitting module according to the execution command, and executing the program codes, wherein the program codes comprises the commands:
to enable the remote controller to access a directory and upload the directory to the server via the communication link, wherein the server stores the directory received;
to send, after sending the radio signal command for playing the broadcasting entry from the remote controller to the electronic device, the media play latest status data corresponding to the radio signal command for playing the broadcasting entry from the remote controller to the server via the communication link, and then the server sends the connection status data to the remote controller via the communication link according to the media play latest status data received, the directory stored previously and corresponding to the remote controller, and other media play latest status data sent from the other remote controller owned by each of the persons recorded in the directories to the server;
to receive the connection status data by the remote controller via the communication link, and then displaying a latest connection information screen of each of persons recorded in the directory by the remote controller according to the connection status data on the display; and
to optionally execute the social chat program by the processor of the remote controller to enable other persons connected to the server to interact with each other by the social chat program.

12. The remote controller of claim 11, wherein the remote controller classifies the playback list by an attribute of each of the broadcasting entries.

13. The remote controller of claim 11, wherein the electronic device is one of a TV set, a set-top box, and a computer.

14. The remote controller of claim 11, wherein the communication link is one of a wired communication network, a wireless communication network, a local network, and INTERNET.

15. The remote controller of claim 11, wherein the playback list is one of an electronic program guide of a wired cable TV system station, an electronic program guide of a broadcast TV station, an electronic program guide of a web-based TV station, a media URL list of a media supply website, a karaoke song list, a CD/MP3 song list, a DVD video list, a VCD video list, and a Blu-ray video list.
